# EUROPEAN PATENT SPECIFICATION

(11) **EP 3 623 118 B1**
(45) Date of publication and mention of the grant of the patent: **07.12.2022**
(21) Application number: 19197164.7
(22) Date of filing: 13.09.2019
(51) Int. Cl.: B25J 11/00, G06F 40/30, G06K 9/00, G10L 15/26, G10L 25/63, G06V 40/16

(54) **EMOTION RECOGNIZER, ROBOT INCLUDING THE SAME, AND SERVER INCLUDING THE SAME**
GEFÜHLSERKENNER, ROBOTER DAMIT UND SERVER DAMIT
DISPOSITIF DE RECONNAISSANCE D'ÉMOTIONS, ROBOT L'INCLUANT ET SERVEUR L'UTILISANT

(30) Priority: 14.09.2018 KR 20180110500
(43) Date of publication of application: 18.03.2020
(73) Proprietor: LG ELECTRONICS INC., Yeongdeungpo-Gu Seoul 07336 (KR)
(72) Inventor: SHIN, Yongkyoung, 06772 Seoul (KR); MOON, Yoonji, 06772 Seoul (KR); PARK, Joonwoo, 06772 Seoul (KR); CHO, Taegil, 06772 Seoul (KR)
(74) Representative: Ter Meer Steinmeister & Partner

(56) References cited:
- WO-A1-2017/189559
- WO-A1-2018/073832
- CN-A- 106 239 533
- KR-A- 20180 054 407
- US-A1- 2016 171 979
- US-A1- 2017 345 424
- US-A1- 2018 075 848

## Description

### BACKGROUND OF THE INVENTION

### 1. Field of the invention

The present invention relates to an emotion recognizer, a robot including the same, and a server including the same, and more particularly, to an emotion recognizer capable of recognizing various emotions of a user, and a robot including the same, and a server including the same.

### 2. Description of the Related Art

Robots have been developed for industrial use and have been part of factory automation. In recent years, as the application field of robots has been further expanded, medical robots, aerospace robots, and the like have been developed, and household robots that can be used in ordinary homes have been manufactured.

As the use of robots has been increased, there is a growing demand for robots that can provide various information, fun, and services while understanding and communicating with users beyond performing simple functions.

In various fields as well as robot field, there is a growing interest in recognizing human emotions and in providing corresponding therapies and services. Thus, the research on method of recognizing human emotion has been actively conducted.

For example, a user may create and use a unique character by using his/her face, or the like. A prior art document 1 (US Patent Publication No. US 9262688B1) discloses a method and system for recognizing an emotion or expression from multimedia data according to a certain algorithm using a fuzzy set.

However, in this prior art document, an analyzer module finally selects one emotion or expression from the candidate emotion or expression database, and outputs the result.

Outputting only one emotion value may be insufficient to provide an emotion-based service by acquiring accurate and various data related to emotion. In addition, it is impossible to determine the difference of the emotion for each input data, and even if the acquired data of various sources is used, there is a limit in that it is greatly influenced by the first set weight by for each source.

US 2016/0171979 A1 discloses an apparatus and methods for providing a companion device adapted to reside continually in the environment of a person and to interact with a user of the companion device to provide emotional engagement with the device.

WO 2017/89559 A1 discloses methods and systems generating an exhibiting multiple inter-active personalities (MIP) in a robot capable of switching back and forth between the MIP during a continuing interaction with a user, a group of users, or other users depending upon the situation.

US 2018/075848 A1 relates to a dialogue apparatus including a memory, an estimation unit, and a dialogue unit. The memory unit associatively stores a certain topic an a change in an affective state of each user before and after a dialogue on that topic. Further, the estimation unit estimates an affective state of a user using information obtained from a detector that detects a sign that expresses the affective state of the user.

WO 2018/073832 A1 discloses a robotic companion device which is emotionally intelligent and exhibits learning capacity. The robotic companion device is configured to capture and analyze affective information and semantic information from the user and to elicit an appropriate response.

CN 106 239 533 A shows an emotion-controlled robot comprising a robot body and an emo-tion control system connected to the robot body.

KR 2018 005 4407A discloses an apparatus for recognizing user emotion to allow natural conversation based on a state of a user, a method thereof, and a robot system using the apparatus. The apparatus comprises an emotion recognizing unit, which is configured to learn user emotions based on user's face images using a convolutional neuronal network model, and to recognized a user emotion based on a face image using the convolutional neuronal network model.

US 2017/345424 A1 relates to a voice dialog device, comprising a voice processing unit configured to obtain a voice pronounced by a user and a result of recognizing the voice; a plurality of estimation units configured to estimate emotion of the user by different methods; and a response unit configured to create a response sentence, based on results of estimating the emotion of the user, and provide the response sentence to the user, wherein when a discrepancy exists between the results of estimating the emotion of the user by the plurality of estimation units, the response unit makes an inquiry to the user, and determines which estimation result is to be adopted, based on content of an obtained response.

### SUMMARY OF THE INVENTION

The object of the present invention is solved by the features of the independent claim. Preferred embodiments are given in the dependent claims.

### BRIEF DESCRIPTION OF THE DRAWINGS

The above and other objects, features and advantages of the present invention will be more apparent from the following detailed description in conjunction with the accompanying drawings, in which:
FIG. 1 is a block diagram of a robot system including a robot according to an embodiment of the present invention;
FIG. 2 is a front view showing an outer shape of a robot according to an embodiment of the present invention;
FIG. 3 is an example of a simplified internal block diagram of a robot according to an embodiment of the present invention;
FIG. 4 is an example of a simplified internal block diagram of a server according to an embodiment of the present invention;
FIG. 5 is an example of a simplified internal block diagram of an emotion recognizer according to an embodiment of the present invention;
FIG. 6 is a diagram for explaining emotion recognition according to an embodiment of the present invention;
FIGS. 7 to 9 are diagrams for explaining the uni-modal emotion recognition according to an embodiment of the present invention;
FIG. 10 is a diagram for explaining multi-modal emotion recognition according to an embodiment of the present invention;
FIG. 11 is a diagram illustrating emotion recognition result according to an embodiment of the present invention;
FIG. 12 is a diagram for explaining the emotion recognition post-processing according to an embodiment of the present invention;
FIG. 13 is a diagram for explaining an emotional interchange user experience of a robot according to an embodiment of the present invention; and
FIG. 14 is a flowchart illustrating an operation method of an emotion recognizer according to an embodiment of the present invention.

### DETAILED DESCRIPTION OF THE PREFERRED EMBODIMENTS

Exemplary embodiments of the present invention are described with reference to the accompanying drawings in detail. The same reference numbers are used throughout the drawings to refer to the same or like parts. Detailed descriptions of well-known functions and structures incorporated herein may be omitted to avoid obscuring the subject matter of the present invention. Reference will now be made in detail to the preferred embodiments of the present invention, examples of which are illustrated in the accompanying drawings. The suffixes "module" and "unit" in elements used in description below are given only in consideration of ease in preparation of the specification and do not have specific meanings or functions. Therefore, the suffixes "module" and "unit" may be used interchangeably.

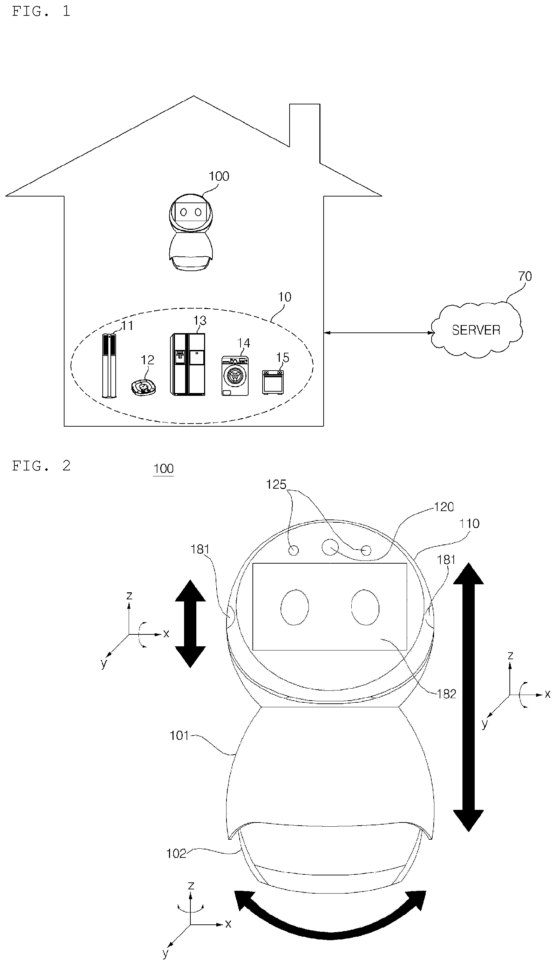

FIG. 1 is a block diagram of a robot system including a robot according to an embodiment of the present invention;

Referring to FIG. 1, the robot system according to an embodiment of the present invention may include at least one robot 100, and a home appliance 10 that has a communication module to communicate with other apparatuses, the robot 100, a server 70, and the like, or to be connected to a network.

For example, the home appliance 10 may include an air conditioner 11 having a communication module, a robot cleaner 12, a refrigerator 13, a washing machine 14, a cooking appliance 15, and the like.

Meanwhile, the communication module included in the home appliance 10 may be a wi-fi communication module, but the present invention is not limited to the communication method.

Alternatively, the home appliance 10 may include other types of communication modules or a plurality of communication modules. For example, the home appliance 10 may include an NFC module, a zigbee communication module, a Bluetooth communication module, and the like.

The home appliance 10 can be connected to a certain server 70 through the wi-fi, i.e. wireless communication module or the like, and can support smart functions such as remote monitoring, remote control, and the like.

The robot system according to an embodiment of the present invention may include a portable terminal (not shown) such as a smart phone, a tablet PC, and the like.

The user may check information on the home appliance 10, 20 in a robot system or control the home appliance 10 through the portable terminal.

Meanwhile, it may be inconvenient for a user to use the portable terminal even all the time even when the user desires to control the home appliance 10 or check certain information in the home.

For example, it is more efficient to have a means to control the home appliance 10 in other ways when the user does not know the current location of the portable terminal or when the portable terminal is in another place.

The robot 100 according to an embodiment of the present invention being located in the house of the user or close enough to the user may receive a user's speech input and thus control the home appliance 10 directly or control the home appliance 10 via the server 70.

Accordingly, the user may control the home appliance 10 without operating any other apparatus excluding the robot 100 disposed in the room, living room, or the like.

Meanwhile, the robot system according to an embodiment of the present invention may include a plurality of Internet of Things (IoT) apparatuses (not shown). Accordingly, the robot system may include the home appliance 10, the robot 100, and the Internet of Things (IoT) apparatuses.

The robot system according to the embodiment of the present invention is not limited to a communication method constituting a network.

For example, the home appliance 10, the robot 100, and the Internet of Things (IoT) apparatuses may be communicatively connected through a wired/wireless router (not shown).

In addition, the apparatuses in the robot system may configure a mesh topology that is individually communicatively conncctcd.

The home appliance 10 in the robot system may communicate with the server 70 or the robot 100 via a wired/wireless router (not shown).

Further, the home appliance 10 in the robot system may communicate with the server 70 or the robot 100 by Ethernet.

The robot system according to an embodiment of the present invention may further include a network apparatus such as a gateway. Alternatively, at least one of the robots 100 provided in the home may be configured to include the gateway function.

The home appliances 10 included in the robot system may be network-connected directly between apparatuses or via the gateway.

Further, the home appliance 10 may be network-connected to be able to communicate with the server 70 directly or via the gateway.

Meanwhile, the gateway may communicate with the server 70 or the mobile terminal 50 by Ethernet.

In addition, the gateway may communicate with the server 70 or the robot 100 via the wired/wireless router.

The home appliance 10 may transmit apparatus operation state information, setting value information, and the like to the server 70 and/or the gateway.

The user may check information related to the home appliance 10 in the robot system or control the home appliance 10 through the portable terminal or the robot 100.

Meanwhile, the server 70 and/or the gateway may transmit a signal for controlling the home appliances 10 to each apparatus in response to a user command input through the robot 100 or a specific event occurred in the home appliance 10 in the robot system.

Meanwhile, according to an embodiment of the present invention, the gateway may include output means such as a display, an sound output unit, and the like.

In this case, the display and the sound output unit may output image and/or audio stored in the gateway or based on a received signal. For example, a music file stored in the gateway may be played and/or outputted through the sound output unit.

In addition, the display and the sound output unit may output the image and/or audio information related to the operation of the gateway.

The server 70 may store and manage information transmitted from the home appliance 10, the robot 100, and other apparatuses. The server 70 may be a server operated by a manufacturer of the home appliance or a company entrusted by the manufacturer.

Information related to the home appliance 10 may be transmitted to the robot 100, and the robot 100 may display the information related to the home appliance 10.

The home appliance 10 may receive information or receive command from the robot 100. At this time, the home appliance 10 may transmit various information to the server 70, and the server 70 may transmit part or all of the information received from the home appliance 10 to the robot 100.

In addition, the server 70 may transmit information itself received from the home appliance 10 or may process and transmit the received information to the robot 100.

Meanwhile, FIG. 1 illustrates the case of a single server 70, but the present invention is not limited thereto, and the system according to the present invention may operate in association with two or more servers.

For example, the server 70 may include a first server for speech recognition and processing, and a second server for providing a home appliance related service such as a home appliance control.

According to an embodiment, the first server and/or the second server may be configured by distributing information and/or functions to a plurality of servers, or may be constituted by a single integrated server.

For example, the first server for speech recognition and processing may be composed of a speech recognition server for recognizing words included in a speech signal and a natural language processing server for recognizing the meaning of a sentence including words included in the speech signal.

Alternatively, the server 70 may include a server for emotion recognition and processing, and a server for providing a home appliance related service such as a home appliance control. In this case as well, the server for emotion recognition and processing may be configured by distributing information and functions to a plurality of servers, or may be constituted by a single integrated server.

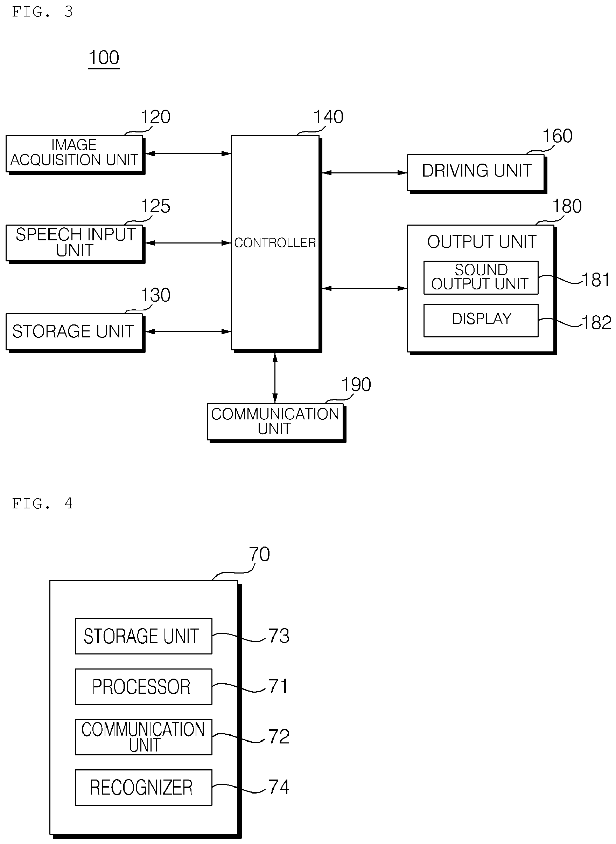

FIG. 2 is a front view showing an outer shape of a robot according to an embodiment of the present invention. FIG. 3 is an example of a simplified internal block diagram of a robot according to an embodiment of the present invention;

Referring to FIGS. 2 and 3, the robot 100 includes a main body 101, 102 that forms an outer shape and houses various components therein.

The body includes a body 101 forming a space in which various components constituting the robot 100 are accommodated, and a support 102 that is disposed in the lower side of the body 101 and supports the body 101, 102).

In addition, the robot 100 may include a head 110 disposed in the upper side of the main body 101 and 102. A display 182 for displaying an image may be disposed on the front surface of the head 110.

In this specification, the front direction means the +y axis direction, the up and down direction means the z axis direction, and the left and right direction means the x axis direction.

The head 110 may rotate within a certain angle range about the x-axis.

Accordingly, when viewed from the front, the head 110 can perform a nodding operation that moves in an up and down direction as if a person nods his or her head in the up and down direction. For example, the head 110 may perform an original position return operation one or more times after rotating within a certain range as if a person nods his/her head in the up and down direction.

Meanwhile, depending on the embodiment, at least a part of the front surface on which the display 182 corresponding to the face of the person in the head 100 is disposed may be configured to move to imitate a nodding movement..

Accordingly, in the present specification, it is mainly described based on the embodiment in which the entire head 110 moves in the up and down direction. However, unless specifically described, the vertically nodding operation of the head 110 may be replaced with a nodding operation of at least a part of the front surface on which the display 182 is disposed in the up and down direction.

The body 101 may be alternatively or additionally configured to be rotatable in the left-right direction. That is, the body 101 may be configured to rotate 360 degrees about the z-axis.

In addition, depending on the embodiment, the body 101 also may be configured to be rotatable within a certain angle range about the x-axis, so that it can move as if it nods in the up and down direction. In this case, as the body 101 rotates in the up and down direction, the head 110 may also rotate about the axis in which the body 101 rotates.

Accordingly, the operation of nodding the head 110 in the up and down direction in the present specification may include both of the case where the head 110 itself rotates in the up and down direction when viewed from the front based on a certain axis, and the case where when the head 101 connected to the body 101 rotates and is nodded together with the body 101 as the body 101 is nodded in the up and down direction.

Meanwhile, the robot 100 may include a power supply unit (not shown) which is connected to an outlet in a home and supplies power into the robot 100.

Alternatively, the robot 100 may include a power supply unit (not shown) provided with a rechargeable battery (not shown) to supply power into the robot 100. Depending on an embodiment, a power supply unit (not shown) may include a wireless power receiving unit for wireless-ly charging the battery.

The robot 100 may include an image acquisition unit 120 that can photograph or take a video of a certain range around the main body 101, 102, or at least the front surface of the main body 101, 102.

The image acquisition unit 120 photographs the surroundings of the main body 101, 102, the external environment, and the like, and may include a camera module. The camera module may include a digital camera. The digital camera may include an image sensor (e.g., a CMOS image sensor) configured to include at least one optical lens, and a plurality of photodiodes (e.g., pixel) that form an image by light passed through the optical lens, and a digital signal processor (DSP) that forms an image based on a signal outputted from the photodiodes. The digital signal processor is able to generate moving image composed of still images as well as still image.

Several cameras may be installed for each part of the robot for photographing efficiency. Preferably, the image acquisition unit 120 may include a front camera provided in the front surface of the head 110 to acquire image of the front of the main body 101, 102. However, the number, disposition, type, and photographing range of the cameras provided in the image acquisition unit 120 are not necessarily limited thereto.

The image acquisition unit 120 may photograph the front direction of the robot 100, and may take an image/video of the user for user recognition.

In addition, the image photographed and acquired by the image acquisition unit 120 may be stored in a storage unit 130.

In addition, the robot 100 may include a speech input unit 125 for receiving a speech input of a user.

The speech input unit 125 may include a processor for converting an analog speech into digital data, or may be connected to the processor to convert a speech signal inputted by a user into data to be recognized by the server 70 or a controller 140.

The speech input unit 125 may include a plurality of microphones to enhance the accuracy of reception of user speech input, and to determine the position of the user.

For example, the speech input unit 125 may include at least two microphones.

The plurality of microphones (MICs) may be disposed at different positions, and may acquire an external audio signal including a speech signal to process the audio signal as an electrical signal.

Meanwhile, at least two microphones, which are an input device, are required to estimate the direction of a sound source that generated sound and a user, and the resolution (angle) of the direction detection becomes higher as the distance between the microphones is physically far.

Depending on the embodiment, two microphones may be disposed in the head 110.

Further, the position of the user on a three-dimensional space can be determined by further including at least one, preferably two microphones, in the rear surface of the head 110.

Referring to FIG. 2, the robot 100 may include the controller 140 for controlling the overall operation, the storage unit 130 for storing various data, and a communication unit 190 for transmitting and receiving data with other apparatuses such as the server 70.

The robot 100 may further include a driving unit 160 that rotates the body 110 and the head 110. The driving unit 160 may include a plurality of driving motors (not shown) for rotating and/or moving the body 101 and the head 110.

The controller 140 controls the overall operation of the robot 100 by controlling the image acquisition unit 120, the driving unit 160, the display 182, and the like, which constitute the robot 100.

The storage unit 130 records various types of information required for controlling the robot 100, and may include a volatile or nonvolatile recording medium. The recording medium stores data that can be read by a microprocessor, and may include a hard disk drive (HDD), a solid state disk (SSD), a silicon disk drive (SDD), a ROM, a RAM, a CD-ROM, a Magnetic tape, a floppy disk, an optical data storage device, and the like.

In addition, the controller 140 may transmit the operation state of the robot 100, user input, or the like to the server 70, or the like through the communication unit 190.

The communication unit 190 includes at least one communication module so that the robot 100 is connected to the Internet or a certain network.

In addition, the communication unit 190 is connected to the communication module provided in the home appliance 10 and processes data transmission/reception between the robot 100 and the home appliance 10.

Meanwhile, the storage unit 130 may store data for speech recognition, and the controller 140 may process the speech input signal of the user received through the speech input unit 125 and perform a speech recognition process.

Since various known speech recognition algorithms can be used for the speech recognition process, a detailed description of the speech recognition process will be omitted in this specification.

Meanwhile, the controller 140 may control the robot 100 to perform a certain operation based on the speech recognition result.

For example, when a command included in the speech signal is a command for controlling the operation of a certain home appliance, the controller 140 may control to transmit a control signal based on the command included in the speech signal to a control target home appliance.

In addition, when the command included in the speech signal is a command for controlling the operation of a certain home appliance, the controller 140 may control the body 101 of the robot to rotate in the direction toward the control target home appliance.

Meanwhile, the speech recognition process may be performed in the server 70 without being performed in the robot 100 itself.

In this case, the controller 140 may control the communication unit 190 so that the user input speech signal is transmitted to the server 70.

Alternatively, a simple speech recognition may be performed by the robot 100, and a high-level speech recognition such as natural language processing may be performed by the server 70.

For example, when a keyword speech input including a preset keyword is received, the robot may be switched from a standby state to an operating state. In this case, the robot 100 performs only the speech recognition process up to the input of the keyword speech, and the speech recognition for the subsequent user speech input may be performed through the server 70.

Meanwhile, depending on an embodiment, the controller 140 may compare the user image acquired through the image acquisition unit 120 with information stored in the storage unit 130 to determine whether the user is a registered user.

In addition, the controller 140 may control to perform a specific operation only for the speech input of the registered user.

The controller 140 may control the rotation of the body 101 and/or the head 111, based on the user image information acquired through the image acquisition unit 120.

Accordingly, interaction and communication between the user and the robot 100 can be easily performed.

Meanwhile, the robot 100 may include an output unit 180 to display certain information as an image or to output certain information as a sound.

The output unit 180 may include a display 182 for displaying information corresponding to a user's command input, a processing result corresponding to the user's command input, an operation mode, an operation state, an error state, and the like as an image.

The display 182 may be disposed in the front surface of the head 110 as described above.

According to an embodiment, the display 182 may be a touch screen having a mutual layer structure with a touch pad. In this case, the display 182 may be used as an input device for inputting information by a user's touch as well as an output device.

In addition, the output unit 180 may further include a sound output unit 181 for outputting an audio signal. The sound output unit 181 may output a notification message such as a warning sound, an operation mode, an operation state, and an error state, and the like, information corresponding to a command input by a user, a processing result corresponding to a command input by the user, and the like, as sound. The sound output unit 181 may convert an electric signal from the controller 140 into an audio signal and output it. For this purpose, a speaker, or the like may be provided.

Referring to FIG. 2, the sound output unit 181 is disposed in the left and right sides of the head 110, and may output certain information as sound.

Meanwhile, the outer shape and structure of the robot shown in FIG. 2 are illustrative, and the present invention is not limited thereto. For example, the positions and numbers of the speech input unit 125, the image acquisition unit 120, and the sound output unit 181 may vary according to design specifications. Further, the rotation direction and the angle of each component may also vary. For example, unlike the rotation direction of the robot 100 shown in FIG. 2, the entire robot 100 may be inclined or shaken in a specific direction.

Meanwhile, the robot 100 according to an embodiment of the present invention may access to the Internet and a computer by the support of a wired or wireless Internet function.

In addition, the robot 100 according to an embodiment of the present invention can perform speech and video call functions, and such a call function may be performed by using an Internet network, a mobile communication network, or the like according to Speech over Internet Protocol (VoIP).

Meanwhile, the controller 140 may control the display 182 to display the image of the video call counterpart and the image of the user in the video call according to the setting of the user, and control the sound output unit 181 to output a speech based on the received speech signal of the video call counterpart.

A robot system according to an embodiment of the present invention may include two or more robots that perform a video call.

FIG. 4 is an example of a simplified internal block diagram of a server according to an embodiment of the present invention.

Referring to FIG. 4, the server 70 may include a communication unit 72, a storage unit 73, a recognizer 74, and a processor 71.

The processor 71 may control the overall operation of the server 70.

Meanwhile, the server 70 may be a server operated by manufacturer of a home appliance such as the robot 100 or a server operated by a service provider, or may be a kind of a cloud server.

The communication unit 72 may receive various data such as state information, operation information, handling information, and the like from a portable terminal, a home appliance such as the robot 100, a gateway, and the like.

The communication unit 72 can transmit data corresponding to the received various information to the portable appliance, the home appliance such as the robot 100, the gateway, and the like.

To this end, the communication unit 72 may include one or more communication modules such as an Internet module, a mobile communication module, and the like.

The storage unit 73 may store the received information, and may have data for generating corresponding result information.

In addition, the storage unit 73 may store data used for machine learning, result data, and the like.

The recognizer 74 may serve as a learning device of the home appliance such as the robot 100.

The recognizer 74 may include an artificial neural network, e.g., a deep neural network (DNN) such as a Convolutional Neural Network (CNN), a Recurrent Neural Network (RNN), a Deep Belief Network (DBN), and the like, and may learn the deep neural network (DNN).

Meanwhile, after learning according to the setting, the processor 71 may control the artificial neural network structure of the home appliance such as the robot 100 to be updated to the learned artificial neural network structure.

Further, the recognizer 74 may receive input data for recognition, recognize attributes of object, space, and emotion contained in the input data, and output the result. In this case, the communication unit 72 may transmit the recognition result to the robot 100.

In addition, the recognizer 74 may analyze and learn usage-related data of the robot 100, recognize the usage pattern, the usage environment, and the like, and output the result. In this case, the communication unit 72 may transmit the recognition result to the robot 100.

Accordingly, the home appliance products such as the robot 100 may receive the recognition result from the server 70, and operate by using the received recognition result.

The server 70 may receive the speech input signal uttered by the user and perform speech recognition. To this end, the server 70 may include a speech recognizer and may include an artificial neural network that is learned to perform speech recognition on the speech recognizer input data and output speech recognition result.

Meanwhile, the server 70 may include a speech recognition server for speech recognition. In addition, the speech recognition server may include a plurality of servers that share and perform a certain process during speech recognition. For example, the speech recognition server may include an automatic speech recognition (ASR) server for receiving speech data and converting the received speech data into text data, and a natural language processing (NLP) server for receiving the text data from the automatic speech recognition server and analyzing the received text data to determine a speech command. In some cases, the speech recognition server may further include a text to speech (TTS) server for converting the text speech recognition result outputted by the natural language processing server into speech data and transmitting the speech data to other server or the home appliance.

The server 70 may perform emotion recognition on the input data. To this end, the server 70 may include an emotion recognizer, and the emotion recognizer may include an artificial neural network that is learned to output emotion recognition result by performing emotion recognition for the input data.

Meanwhile, the server 70 may include an emotion recognition server for emotion recognition. That is, at least one of the servers 70 may be an emotion recognition server having an emotion recognizer for performing emotion recognition.

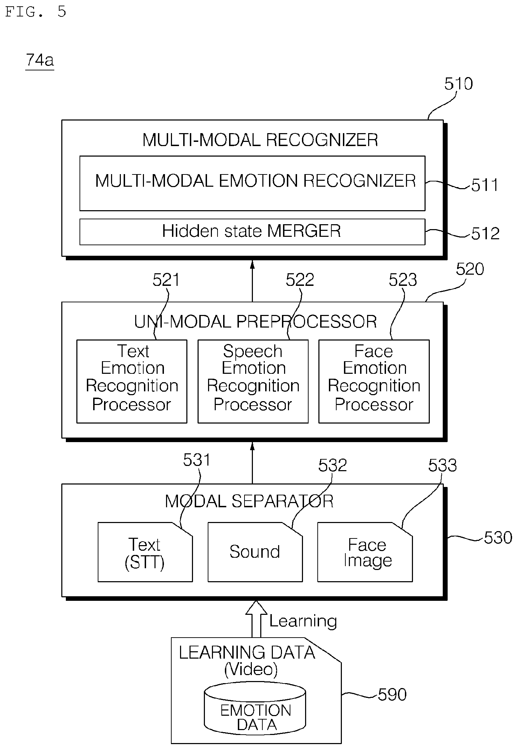

FIG. 5 is an example of a simplified internal block diagram of an emotion recognizer according to an embodiment of the present invention.

Referring to FIG. 5, an emotion recognizer 74a provided in the robot 100 or the server 70 may perform deep learning by using emotion data as input data 590.

The emotion recognizer 74a according to the embodiment of the present invention may include a uni-modal preprocessor 520 including a plurality of recognizers for each modal 521, 522, and 523 that are learned to recognize emotion information of the user included in the unimodal input data, and a multi-modal recognizer 510 that is learned to merge the output data of the plurality of recognizers for each modal 521, 522, and 523 and recognize the emotion information of the user included in the merged data.

Emotion data is emotion information data having information on the emotion of the user, and may include emotion information, such as image, speech, and bio-signal data, which can be used for emotion recognition. Preferably, the input data 590 may be image data including a user's face, and more preferably, the learning data 590 may further include audio data including user's speech.

Emotion is the ability to feel about stimulus, and is the nature of the mind that accepts sensory stimulation or impression. In emotion engineering, emotion is defined as a complex emotion such as pleasantness and discomfort as a high level of psychological experience inside the human body due to changes in the environment or physical stimulation from the outside.

In the present specification, emotion may mean feelings of pleasantness, discomfort or the like that occur with respect to stimulation, and emotion may be recognized as any one of N representative emotional states. These N representative emotional states may be named emotion class.

For example, the emotion recognizer 74a recognizes six representative emotion classes such as surprise, happiness, sadness, displeasure, anger, and fear, and may output one of the representative emotion classes as a result of the emotion recognition, or may output the probability value for each of six representative emotion classes.

Alternatively, the emotion recognizer 74a according to an embodiment of the present invention may further include a neutrality emotion class indicating a default emotion state in which six emotions do not occur in addition to the emotion classes such as surprise, happiness, sadness, displeasure, anger, and fear, as an emotion that can be recognized and outputted by the emotion recognizer 74a.

In this case, the emotion recognizer 74a may output any one of the emotion classes selected from surprise, happiness, sadness, displeasure, anger, fear, and neutrality as an emotion recognition result, or may output the probability value for each emotion class such as surprise x%, happiness x%, sadness x%, displeasure x%, anger x%, fear x%, and neutrality x% as an emotion recognition result.

When the emotion of the user is recognized by the artificial intelligence model which learned deep learning of the emotion to be recognized, the result is outputted as a tagging value of the data used in learning the deep learning.

Meanwhile, in a real environment, there are many cases where the user's emotion can not be finally outputted as a single emotion. For example, although a user may express joy emotion in words, an unpleasant emotion may be expressed in a facial expression. In this way, people often output different emotion for each modal such as speech, image, text, and the like.

Accordingly, when the emotion of the user is recognized and outputted as a final single emotion value, or when different emotions, contradictory emotions, similar emotions, and the like of each speech, image, and text are ignored, the emotion different from the feeling that is actually felt by the user may be rccognizcd.

In order to recognize and manage each emotion based on all the information exposed to the outside of the user, the emotion recognizer 74a according to the embodiment of the present invention can recognize the emotion for each uni-modal of speech, image, and text, and may have a structure capable of recognizing emotion even in a multi-modal.

That is, the emotion recognizer 74a according to the embodiment of the present invention may recognize, for each uni-modal, the emotion of the user inputted at a specific time point, and may simultaneously recognize the emotion complexly as a multi-modal.

Meanwhile, the plurality of recognizers for each modal 521, 522, and 523 recognize and process a single type uni-modal input data which are inputted respectively, and may be also named a uni-modal recognizer.

The emotion recognizer 74a according to the embodiment of the present invention may generate the plurality of uni-modal input data by separating the input data 590 for each unimodal. A modal separator 530 may separate the input data 590 into a plurality of uni-modal input data.

Here, the plurality of uni-modal input data may include image uni-modal input data, sound uni-modal input data, and text uni-modal input data separated from the moving image data including the user.

For example, the input data 590 may be moving image data of the user photographed by the camera or photo acquisition unit.

Preferably, the moving image data may include image data in which the user's face or the like is photographed and/or audio data including a speech uttered by a user.

In this case, the modal separator 530 may separate the content of the audio data included in the input data 590 into a text uni-modal input data 531 that is acquired by converting the audio data into text data and sound uni-modal input data of the audio data such as a speech tone, magnitude, height, etc.

The text uni-modal input data may be data acquired by converting a speech separated from the moving image data into text. In some cases, the sound uni-modal input data may be a sound source file of audio data itself, or a file whose preprocess has been completed, such as removing noise from a sound source file.

In addition, the modal separator 530 may separate image uni-modal input data 533 that includes one or more facial image data from the image data contained in the input data 590.

Meanwhile, the separated uni-modal input data 531, 532, and 533 may be inputted to the uni-modal preprocessor 520 including a plurality of modal recognizers for each modal 521, 522, and 523 that are learned to recognize emotion information of a user based on each unimodal input data 531, 532, and 533.

For example, the text uni-modal input data 531 may be inputted to the text emotion recognizer 521 which performs deep learning by using text as learning data.

The sound uni-modal input data 532 may be inputted, while being used as the speech learning data, to a speech emotion recognizer 522 that performs deep learning.

The image uni-modal input data 533 including one or more face image data may be inputted, while being used as the image learning data, to a face emotion recognizer 523 that performs deep learning.

The text emotion recognizer 521 may recognize emotion of the user by recognizing vocabularies, sentence structures, and the like included in the sound to text (STT) data converted into text. For example, as more words related to happiness are used or a word expressing a strong degree of happiness is recognized, the probability value for the happiness emotion class may be recognized higher than the probability value for other emotion class. Alternatively, the text emotion recognizer 521 may directly output happiness which is the emotion class corresponding to the recognized text as the emotion recognition result.

In addition, the text emotion recognizer 521 may also output a text feature point vector along with emotion recognition result.

The speech emotion recognizer 522 extracts the feature points of the input speech data. At this time, the speech feature points may include tone, volume, waveform, etc. of speech. The speech emotion recognizer 522 may determine the emotion of the user by detecting a tone of speech or the like.

In addition, the speech emotion recognizer 522 may also output the emotion recognition result and the detected speech feature point vectors.

The face emotion recognizer 523 may recognize the facial expression of the user by detecting the facial area of the user in the input image data and recognizing facial expression landmark point information which is the feature points constituting the facial expression. In addition, the face emotion recognizer 523 may output the emotion class corresponding to the recognized facial expression or the probability value for each emotion class, and also output the facial feature point (facial expression landmark point) vector.

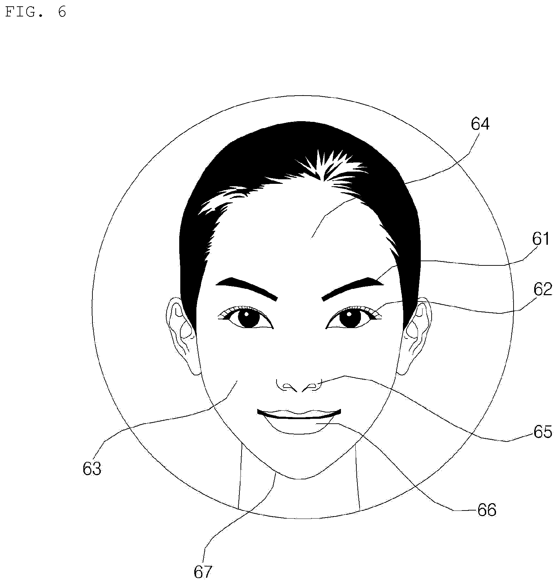

FIG. 6 is a diagram for explaining emotion recognition according to an embodiment of the present invention, and illustrates components of a facial expression.

Referring to FIG. 6, a facial expression landmark point may be an eyebrow 61, an eye 62, a cheek 63, a forehead 64, a nose 65, a mouth 66, a jaw 67, and the like.

The landmark points (61 to 67) in FIG. 6 are exemplary and the types and numbers may be changed.

For example, if only a small number of facial expression landmark points having a strong characteristic such as the eyebrow 61, the eye 62, and the mouth 66 may be used, or a facial expression landmark point having a large degree of change may be used when a specific expression is created for each user.

Meanwhile, the face emotion recognizer 523 may recognize the facial expression based on the position and shape of the facial expression landmark points (61 to 67).

The face emotion recognizer 523 may include the artificial neural network that has achieved deep learning with image data containing at least a part of the facial expression landmark points (61 to 67), thereby recognizing the facial expression of the user.

For example, when the user opens the eyes 62 and opens the mouth 66 widely, the face emotion recognizer 523 may determines the emotion of the user as happiness among the emotion classes or may output the emotion recognition result having the highest probability of happiness.

Meanwhile, the plurality of recognizers for each modal may include an artificial neural network corresponding to the input characteristics of the uni-modal input data that are inputted respectively. In addition, a multi-modal emotion recognizer 511 may also include an artificial neural network corresponding to the characteristics of the input data.

For example, the face emotion recognizer 523 for performing image-based learning and recognition may include a Convolutional Neural Network (CNN), the other emotion recognizers 521 and 522 include a deep-network neural network (DNN), and the multi-modal emotion recognizer 511 may include an artificial neural network of a Recurrent Neural Network (RNN).

The emotion recognizer for each modal 521, 522, and 523 may recognize emotion information included in the uni-modal input data 531, 532, and 533 that are inputted respectively, and output emotion recognition results. For example, the emotion recognizer for each modal 521, 522, and 523 may output the emotion class having the highest probability among a certain number of preset emotion classes as the emotion recognition result, or output the probability for emotion class as emotion recognition results.

Meanwhile, the emotion recognizer for each modal 521, 522, and 523 may learn and recognize text, speech, and image in each deep learning structure, and derive intermediate vector value composed of feature point vector for each uni-modal.

In addition, the multi-modal recognizer 510 may perform multi-modal deep learning with the intermediate vector value of each speech, image, and text.

As described above, since the input of the multi-modal recognizer 510 is generated based on the output of the emotion recognizer for each modal 521, 522, and 523, the emotion recognizer for each modal 521, 522 and 523 may operate as a kind of preprocessor.

Meanwhile, the emotion recognizer 74a according to an embodiment of the present invention may use a total of four deep learning models including the deep learning model of three emotion recognizers for each modal 521, 522, 523 and the deep learning model of one multimodal recognizer 510.

Meanwhile, the multi-modal recognizer 510 may include a merger 512 for combining the feature point vectors outputted from the plurality of recognizers for each modal 521, 522, and 523, and a multi-modal emotion recognizer 511 learned to recognize emotion information of the user included in the output data of the merger 512.

Here, the merger 512 may synchronize the output data of the plurality of recognizers for each modal 521, 522, and 523, and may combine (vector concatenation) the feature point vectors to output to the multi-modal emotion recognizer 511.

The multi-modal emotion recognizer 511 may recognize the emotion information of the user from the input data and output the emotion recognition result.

For example, the multi-modal emotion recognizer 511 may output the emotion class having the highest probability among a certain number of preset emotion classes as emotion recognition result, or may output the probability value for each emotion class as emotion recognition result.

Accordingly, the emotion recognizer 74a according to the embodiment of the present invention may output a plurality of uni-modal emotion recognition results and one multi-modal emotion recognition result.

The emotion recognizer 74a according to the embodiment of the present invention may output the plurality of uni-modal emotion recognition results and one multi-modal emotion recognition result as a level (probability) for each emotion class.

For example, the emotion recognizer 74a may output the probability value for emotion classes of surprise, happiness, neutral, sadness, displeasure, anger, and fear, and it may mean that the probability of recognized emotion class is higher as the probability value is higher. Here, the sum of the probability values of seven emotion classes will be 100%.

The emotion recognizer 74a may output the complex emotion recognition result including the respective emotion recognition results 521, 522, and 523 of the plurality of recognizers for each modal and the emotion recognition result of the multi-modal recognizer 511.

Accordingly, the robot 100 may provide emotional interchange user experience (UX) based on emotion recognition results of three uni-modals and one multi-modal.

According to the setting, the emotion recognizer 74a may output the recognition result occupying a majority of the complex emotion recognition results and the recognition result having the highest probability value as the final recognition result. Alternatively, the controller 140 of the robot 100 received a plurality of emotion recognition results may determine the final recognition result according to a certain criteria.

The emotion recognizer 74a according to the present invention may recognize and manage the emotion of each of the speech (speech tone, etc.), the image (facial expression, etc.), and the text (the content of talk, etc.) as a level. Accordingly, the emotional interchange user experience (UX) may be handled differently for each modal.

In addition, emotion recognition result for each uni-modal (speech, image, text) and multi-modal emotion recognition result may be simultaneously outputted based on a single time point. Emotion can be recognized complexly with speech, image, and text inputted from a single time point, so that contradictory emotion can be recognized for each uni-modal from the multimodal emotion to determine user's emotional tendency. Accordingly, even if a negative input is received from some modal, the emotional interchange user experience (UX) corresponding to a positive input of the user's real emotional state can be provided by recognizing the overall emotion.

According to the present invention, the robot 100 may be equipped with the emotion recognizer 74a or communicate with the server 70 having the emotion recognizer 74a so as to determine the emotion for uni-modal of only user.

In addition, according to the present invention, the emotional pattern of only user can be analyzed and emotion recognition for each modal can be utilized for emotional care (healing).

Conventional emotion method has difficulty in analyzing emotion by mapping the emotions into a single emotion in the case of contradictory emotions having different recognition results for each modal of the input data.

However, according to the present invention, it is possible to most suitably process various real-life situations through a plurality of inputs and outputs.

In order to complement an input recognizer having low performance, the present invention may constitute a recognizer structure in which a plurality of recognizers 511, 521, 522, and 523 complement each other by a plurality of inputs and outputs in a fusion manner.

The emotion recognizer 74a according to the embodiment of the present invention may separate the speech into sound and meaning, and make a total of three inputs including image, speech (sound), and STT from image and speech inputs.

In addition, in order to achieve optimum performance for each of the three inputs, the emotion recognizer 74a may have a different artificial neural network model for each input, such as Convolutional Neural Network (CNN) and Long Short-Term Memory (LSTM). For example, the image-based recognizer 523 may have a CNN structure, and the multi-modal emotion recognizer 511 may have a long-short-term memory (LSTM) structure. Thus, a neural network customized for each input characteristic can be configured.

The output of the uni-modal recognizer 521, 522, 523 for each input may be the probability value for seven emotion classes and the vector value of feature points expressing the emotion well.

The multi-modal recognizer 510 does not simply calculate the emotion value for the three inputs by a statistical method but combines the vector value of the feature points that express the emotion well through the entire joint layer and the LSTM so as to help improve performance and to cover various cases in real life in such a manner that another recognizer helps the difficult problem that one recognizer has.

For example, even when only a speech is heard from a place where face recognition is difficult, in the emotion recognizer 74a according to the embodiment of the present invention, the speech based recognizer 521, 522 and the multi-modal emotion recognizer 511 may recognize the emotion of the user.

Further, since the emotion recognizer 74a can recognize the complex emotion state of the user by merging the recognition results of the image, speech, and character data with the multi-modal recognition result, the emotion recognition can be achieved for various situations in real life.

Meanwhile, the uni-modal preprocessor 520 may include uni-modal recognizers 521, 522, 523 that recognize and process one uni-modal input data inputted respectively.

Referring to FIG. 5, the uni-modal preprocessor 520 may include a text emotion recognizer 521, a speech emotion recognizer 522, and a face emotion recognizer 523.

These uni-modal recognizers 521, 522, 523 may be previously learned and secured.

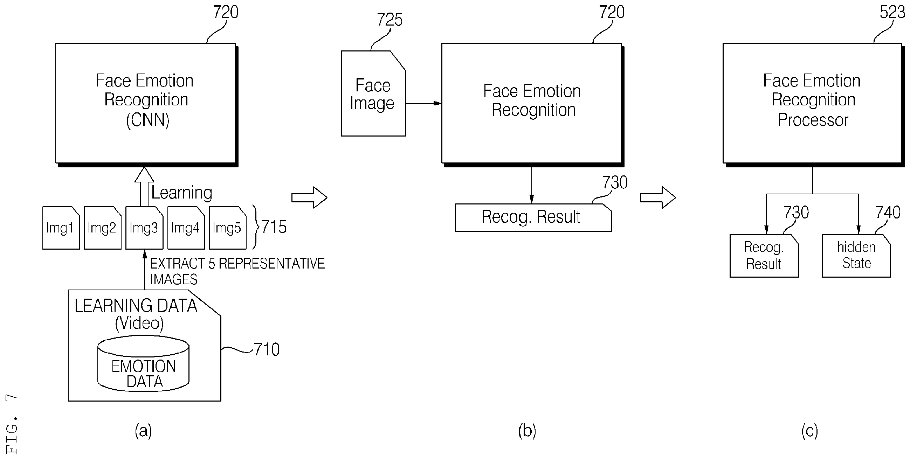

FIGS. 7 to 9 are diagrams for explaining the unmodel emotion recognition according to an embodiment of the present invention.

FIG. 7 shows an example of the unmodal learning process of the face emotion recognizer 523.

Referring to FIG. 7A, an artificial neural network 720 for face emotion recognition may perform deep learning, based on an image-based input data 710.

The image-based input data 710 may be video data, and the artificial neural network 720 may learn by video data or perform learning by a plurality of image data extracted from the video data.

FIG. 7A shows an example of learning by extracting five representative images 715, but the present invention is not limited thereto.

The artificial neural network 720 for the face emotion recognizer 523 may be a Convolutional Neural Network (CNN) or the like which is frequently used for image-based learning and recognition.

As described above, the CNN artificial neural network 720 having an advantage in image processing may be learned to recognize emotion by receiving input data including a user's face.

Referring to FIG. 7B, when a face image 725 is inputted, the artificial neural network 720 for the face emotion recognizer 523 may extract feature point such as a facial expression landmark point of the inputted face image 725 and may recognize emotion on the user's face.

The emotion recognition result 730 outputted by the artificial neural network 720 for the face emotion recognizer 523 may be any one emotion class selected from among surprise, happiness, sadness, displeasure, anger, fear, and neutrality. More preferably, the emotion recognition result 730 may include probability value for each emotion class such as surprise x%, happiness x%, sadness x%, displeasure x%, anger x%, fear x%, and neutrality x%.

As described with reference to FIG. 5, since the input of the multi-modal recognizer 510 is generated based on the output of the emotion recognizer for each modal 521, 522, and 523, the emotion recognizer for each modals 521, 522, and 523 may serve as preprocessor.

Referring to FIG. 7C, the face emotion recognizer 523 may output not only the emotion recognition result 730, but also a hidden state 740 which is a feature point vector extracted based on the inputted face image.

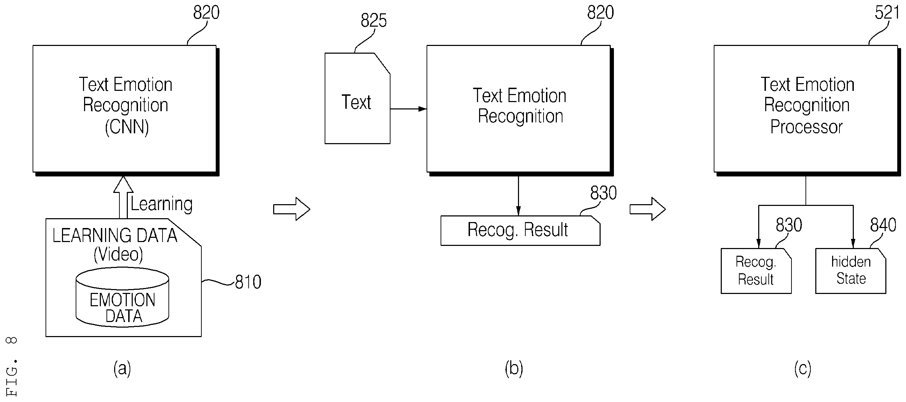

FIG. 8 illustrates the unmodal learning process of the text emotion recognizer 521.

Referring to FIG. 8A, an artificial neural network 820 for text emotion recognition may perform deep learning based on a text-based input data 810.

The text-based input data 810 may be STT data that is acquired by converting speech uttered by the user into text, and an artificial neural network 820 may perform learning by using STT data or other text data.

The artificial neural network 820 for the text emotion recognizer 521 may be one of the deep neural networks DNN that performs deep learning.

Referring to FIG. 8B, when the text data 825 is inputted, the artificial neural network 820 for the text emotion recognizer 521 may extract the feature point of the inputted text data 825 and recognize the emotion expressed in the text.

The emotion recognition result 830 outputted by the artificial neural network 820 for the text emotion recognizer 521 may be any one emotion class selected from among surprise, happiness, sadness, displeasure, anger, fear, and neutrality. More preferably, the emotion recognition result 830 may include probability value for each emotion class such as surprise x%, happiness x%, sadness x%, displeasure x%, anger x%, fear x%, and neutrality x%.

The text emotion recognizer 521 may also serve as a preprocessor for the multi-modal recognizer 510. Referring to FIG. 8C, the text emotion recognizer 521 may output not only an emotion recognition result 830, but also a hidden state 840 which is the feature point vector extracted based on the inputted text data.

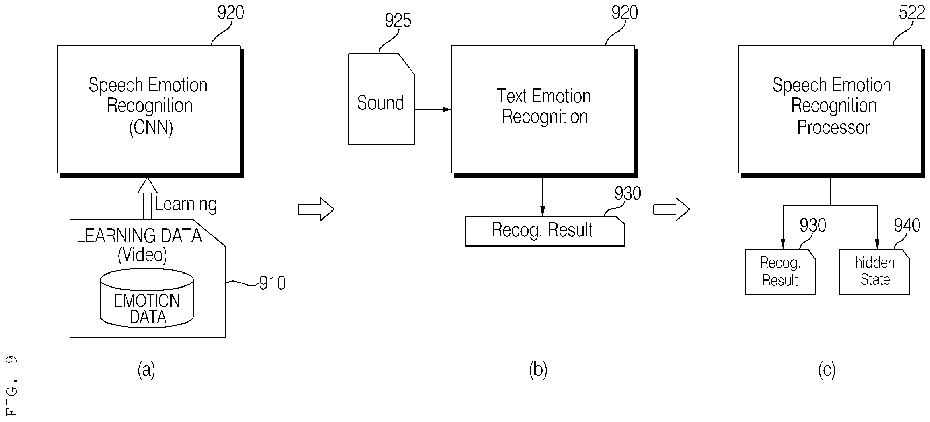

FIG. 9 shows an example of the uni-modal learning process of the speech emotion recognizer 522.

Referring to FIG. 9A, the artificial neural network 820 for emotion recognition may perform deep learning based on a speech-based input data 910.

The speech-based input data 910 may be data including sound of a speech uttered by a user, or may be a sound file itself or a file in which a preprocess, such as noise removing from the sound file, has been completed.

An artificial neural network 920 may perform learning to recognize emotion from the speech-based input data 910.

The artificial neural network 920 for the speech emotion recognizer 522 may be one of the deep neural networks DNN that performs deep learning.

Referring to FIG. 9B, when a sound data 925 is inputted, the artificial neural network 920 for the speech recognition recognizer 522 may extract the feature point of the inputted sound data 925 and may recognize the emotion expressed in the sound.

An emotion recognition result 930 outputted by the artificial neural network 920 for the speech emotion recognizer 522 may be any one emotion class selected from among surprise, happiness, sadness, displeasure, anger, fear, and neutrality. More preferably, the emotion recognition result 830 may include probability value for each emotion class such as surprise x%, happiness x%, sadness x%, displeasure x%, anger x%, fear x%, and neutrality x%.

The speech emotion recognizer 522 may also serve as a preprocessor of the multi-modal recognizer 510. Referring to FIG. 9C, the speech emotion recognizer 522 may output not only the emotion recognition result 930, but also output a hidden state 940 which is a feature point vector extracted based on the inputted sound data.

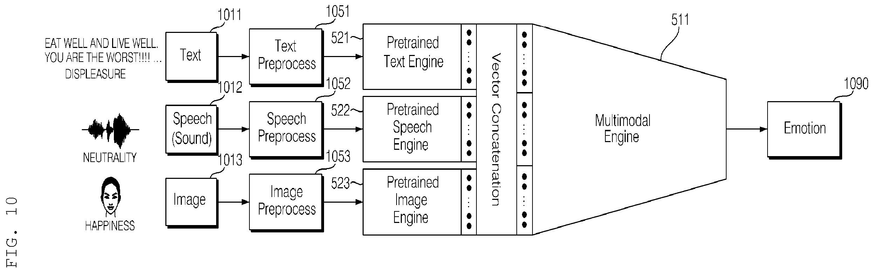

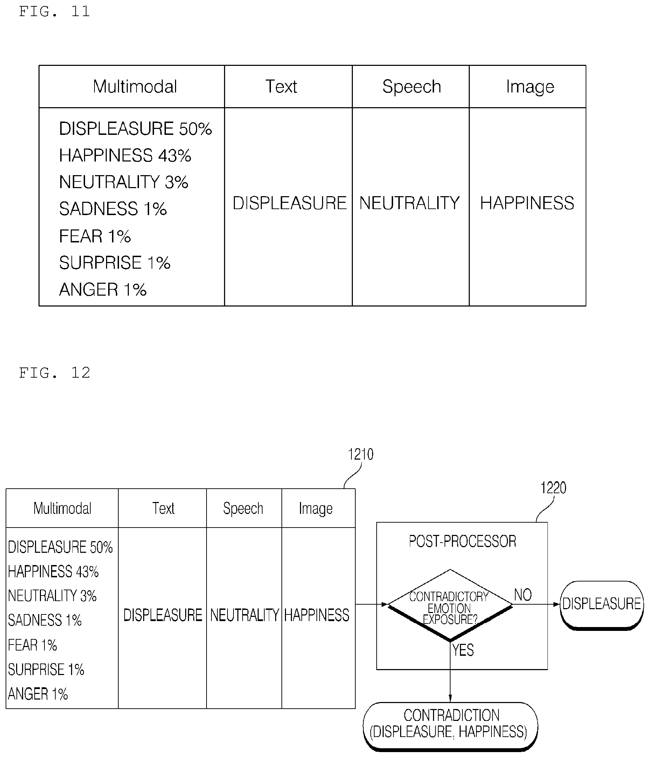

FIG. 10 is a diagram for explaining multi-modal emotion recognition according to an embodiment of the present invention. FIG. 11 is a diagram illustrating emotion recognition result according to an embodiment of the present invention.

Referring to FIG. 10, the emotion recognizer 74a provided in the robot 100 or the server 70 may receive a text uni-modal input data 1011 including the contents of a speech uttered by the user, a sound uni-modal input data 1012 including sound of the speech uttered by the user, and an image uni-modal input data 1013 including the face image of the user.

In addition, the emotion recognizer 74a may receive the moving image data including the user, and the modal separator 530 may divide the contents of the audio data included in the input data into the text uni-modal input data 1011 converted into a text data, and the sound uni-modal input data 1012 of audio data such as sound tone, magnitude, height, and the like, and may extract the image uni-modal input data 1013 including the user's face image from the moving image data.

Meanwhile, preprocess of the uni-modal input data 1011, 1012, 1013 may be performed.

For example, in the preprocess steps 1051, 1052, 1053, a process of removing noise included in the text, speech, and image uni-modal input data 1011, 1012, 1013 or extracting and converting data to be suitable for emotion recognition.

When the preprocess is completed, the uni-modal recognizers 521, 522, 523 may recognize the emotion from the uni-modal input data 1011, 1012, 1013 inputted respectively, and may output the emotion recognition result.

In addition, the uni-modal recognizers 521, 522, and 523 may output the feature point vector extracted based on the uni-modal input data 1011, 1012, and 1013 inputted respectively to the multi-modal recognizer 510.

The merger 512 of the multi-modal recognizer 510 may combine the feature point vectors (Vector Concatenation) and output to the multi-modal emotion recognizer 511.

The multi-modal emotion recognizer 511 may perform emotion recognition with respect to the multi-modal input data based on the three uni-modal input data 1011, 1012, and 1013.

To this end, the multi-modal emotion recognizer 511 may include an artificial neural network that previously performed deep-learning by multi-modal input data.

For example, the multi-modal emotion recognizer 511 may include recurrent neural networks having a circulation structure in which the current hidden state is updated by receiving the previous hidden state. Meanwhile, since the related data is inputted to the multi-modal, it may be advantageous to use the recurrent neural network in comparison with other artificial neural networks having independent input and output. In particular, the multi-modal emotion recognizer 511 may include a long short term memory (LSTM) that improved the performance of the recurrent neural network.

The emotion recognizer 74a provided in the robot 100 or the server 70 may have a plurality of deep-learning structures.

In the emotion recognizer 74a, the three uni-modal recognizers 521, 522, and 523 and the one multi-modal emotion recognizer 511 may form a hierarchical neural network structure. In addition, the multi-modal emotion recognizer 511 may further include an artificial neural network other than the recurrent neural network to constitute a hierarchical neural network autonomously.

Meanwhile, the emotion recognizer 74a outputs emotion recognition result 1090.

The emotion recognizer 74a may recognize the emotion of the user as a level (probability) for each of seven types of emotion classes in a uni-modal (speech/image/text) and a multi-modal.

The emotion recognizer 74a may recognize emotion for each of four types of modal of the inputted speech, image, text, speech + image + text of the user, and thus can help in accrate interaction with the user.

The output of the three inputs of the uni-modal (speech/image/text) may be a feature vector that expresses an emotion recognition value for each input and the emotion well.

The feature point vector that expresses emotion well may be combined in a fusion scheme using Fully Connetted Layer and Long Short Term Memory (LSTM). Thus, three uni-modal inputs may be combined to recognize emotion.

FIG. 11 shows an example of recognized emotion result values.

Referring to FIG. 11, the uni-modal emotion recognition result for each uni-modal input data of speech, image, and text may be outputted as displeasure, neutrality, and happiness, respectively.

In addition, the multi-modal emotion recognition result acquired by performing emotion recognition after combining feature point vectors of speech, image, and text may be outputted as a probability value for each emotion class such as displeasure 50% and happiness 43%.

More preferably, the uni-modal emotion recognition result may also be outputted as the probability value for each emotion class.

The emotion recognizer 74a according to the present invention may improve recognition performance by using information on not only image and sound but also text.

In addition, even if specific uni-modal input data is insufficient, complementary recognizers 511, 521, 522, and 523 may be constituted by recognizing through other uni-modal input data and multi-modal input data.

In addition, various emotions can be recognized by a combination of four types of information in total.

FIG. 11 shows the state of recognizing the input 1011, 1012, 1013 illustrated in FIG. 10, and shows emotion recognition result in the case where the face of the user is a smiley face, but the user speaks a negative vocabulary.

As described above, human emotions are difficult to define as a single emotion, and contradictory or complex emotion that has facial expression and word that are contradictory may occur frequently in real life environment.

In many researches, the emotion recognition result is derived from only a single emotion. However, in the case of the contradictory emotional state in which facial expression and word are contradictory as shown in FIG. 11, if only a single emotion is mapped, the possibility of false recognition increases.

However, in the emotion recognition method according to the present invention, various combinations can be achieved through a total of four emotion probability values including the output for three inputs and the finally combined output value.

The emotion recognizer 74a according to the present invention may recognize the complex emotion state of the user by complementarily using and integrating image, speech, and text data. Accordingly, the emotion recognizer 74a may recognize the emotion in various situations in real life.

Further, since the emotion recognizer 74a according to the present invention determines complex emotion state, there is a high possibility that the emotion recognizer 74a can be utilized in a psychotherapy robot of user. For example, even if negative emotion is recognized from the user, the robot 100 including the emotion recognizer 74a may provide an emotion care (therapy) service with positive emotion expression.

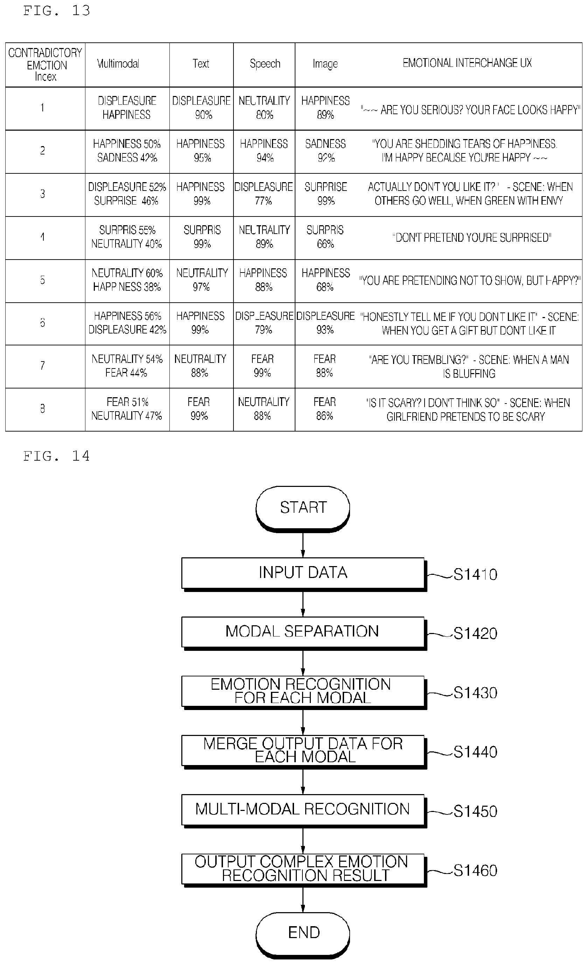

FIG. 12 is a diagram for explaining the emotion recognition post-processing according to an embodiment of the present invention. FIG. 13 is a diagram for explaining an emotional interchange user experience of a robot according to an embodiment of the present invention.

Referring to FIG. 12, when complex emotion recognition result 1210 includes two or more recognition results that do not match, the emotion recognizer 74a according to the embodiment of the present invention may further include a post-processor 1220 for outputting a final emotion recognition result according to a certain criteria.

The robot 100 according to an embodiment of the present invention may include the post-proccssor 1220.

The robot 100 according to an embodiment of the present invention may include the emotion recognizer 74a including the post-processor 1220 or may include only the post-processor 1220 without including the emotion recognizer 74a.

According to the setting, when the complex emotion recognition result 1210 includes two or more recognition results that are not matched, the post-processor 1220 may output the emotion recognition result matching the emotion recognition result of the multi-modal recognizer 511 among the emotion recognition results of the recognizers for each modal 521, 522, 523 as the final emotion recognition result.

In the example of FIG. 12, since the output 'displeasure' of the text emotion recognizer matches the 'displeasure' having the highest probability value among the emotion recognition result of the multi-modal recognizer 511, the post-processor 1220 may output the 'displeasure' as the final emotion recognition result.

Alternatively, when the complex emotion recognition result 1210 includes two or more recognition results that do not match, the post-processor 1220 may output the contradictory emotion including two emotion classes among the complex emotion recognition result 1210 as the final emotion recognition result.

In this case, the post-processor 1220 may select two emotion classes having the highest probability among the emotion recognition results of the multi-modal recognizer 511 as the above mentioned contradictory emotion.

In the example of FIG. 12, the contradictory emotion including the 'displeasure' and 'happiness' emotion classes may be outputted as the final emotion recognition result.

Meanwhile, the robot 100 according to an embodiment of the present invention may include the emotion recognizer 74a to recognize emotion of the user. Alternatively, the robot 100 according to an embodiment of the present invention may communicate with the server 70 having the emotion recognizer 74a to receive the emotion recognition result of the user.

The robot 100 according to an embodiment of the present invention may include a communication unit 190 for transmitting moving image data including a user to the server 70 and receiving a result of complex emotion recognition including a plurality of emotion recognition results of the user from the server 70, and a sound output unit 181 for uttering a question for checking the emotion of the user by combining two or more recognition results that are not matched when the complex emotion recognition result includes two or more recognition results that are not matched.

As in the various examples listed in FIG. 13, if there is an emotion recognition result corresponding to the contradictory emotion including two or more contradictory recognition results, the robot 100 may utter a question about the contradictory emotion to the user.

For example, the robot 100 may combine the two emotion classes and utter a question for checking the emotion of the user.

In addition, when the complex emotion recognition result received from the server 70 includes two or more recognition results that do not match, the robot 100 may further includes the post-processor 1220 for outputting a final emotion recognition result according to a certain criteria.

When the complex emotion recognition result includes two or more recognition results that do not match, the post-processor 1220 may output the contradictory emotion including two emotion classes among the complex emotion recognition result, as the final emotion recognition result.

In some cases, the post-processor 1220 may select two emotion classes having the highest probability among the complex emotion recognition result, as the contradictory emotion.

According to the present invention, the user may interact with the robot 100 while answering the question of the robot 100, and the satisfaction of the user with respect to the robot 100 that understands and interacts with his/her emotion may be increased.

In addition, even if a negative emotion is recognized from the user, the robot 100 may provide an emotion care (therapy) service through a positive emotion expression.

According to the embodiment, the user may perform a video call using the robot 100, and the emotion recognizer 74a may recognize emotion of the video call counterpart based on the received video call data.

That is, the emotion recognizer 74a may receive the video call data of the video call counterpart and may output the emotion recognition result of the video call counterpart.

In addition, emotion recognition may be performed in the server 70 having the emotion recognizer 74a. For example, the user may perform a video call using the robot 100, and the server 70 may receive the video call data from the robot 100 and transmit the emotion recognition result of user included in the received video call data.

FIG. 14 is a flowchart illustrating an operation method of an emotion recognizer according to an embodiment of the present invention.

Referring to FIG. 14, when data is inputted (S1410), the emotion recognizer 74 according to the embodiment of the present invention may generate a plurality of uni-modal input data based on the input data (S1420). For example, the modal separator 530 may separate input data to generate a plurality of uni-modal input data (S1420).

Each of the recognizers for each modal 521, 522, 523 may recognize the emotion of the user from a corresponding uni-modal input data (S1430).

The recognizers for each modal 521, 522, 523 may output the emotion recognition result and the feature point vector of the uni-modal input data.

The feature point vectors outputted by the recognizer for each modal 521, 522, 523 may be merged in the merger 512, and the multi-modal emotion recognizer 511 may perform emotion recognition with respect to the merged multi-modal data (S1450).

Meanwhile, the emotion recognizer 74 according to an embodiment of the present invention may output complex emotion recognition result including emotion recognition results of the recognizer for each modal 521, 522, 523 and emotion recognition result of the multi-modal emotion recognizer 511.

As described above, the emotion recognizer 74 according to the embodiment of the present invention may constitute four deep learning-based emotion recognition models of uni-modal and multi-modal, thereby recognizing the emotion of user inputted at a single point of time in uni-modal, while complexly recognizing the emotion in multi-modal.

In addition, the emotion recognizer 74 may output the uni-modal emotion recognition result and the multi-modal emotion recognition result by the level (probability) for each emotion class.

Accordingly, a specific emotion feedback of user only may be achieved by recognizing emotion of each of speech, image, and text, and the multi-modal emotion recognition result synthesized speech, image, and text comprehensively may also be synthetically utilized.

According to at least one of the embodiments of the present invention, it is possible to recognize a user emotion and provide an emotion-based service.

Further, according to at least one of the embodiments of the present invention, the emotion of the user can be more accurately recognized by using the artificial intelligence learned by a deep learning.

Further, according to at least one of the embodiments of the present invention, a plurality of emotion recognition results may be outputted, and the emotion recognition results may be combined and used in various manners.

Further, according to at least one of the embodiments of the present invention, a talking with the user may be achieved based on a plurality of emotion recognition results, so that user's feeling can be shared and the emotion of the user can be recognized more accurately.

Further, according to at least one of the embodiments of the present invention, the emotion of the user can be recognized more accurately by performing the unimodal and multi-modal emotion recognition separately and complementarily using a plurality of emotion recognition results.

Further, according to at least one of the embodiments of the present invention, it is possible to recognize a complex emotion, thereby improving the satisfaction and convenience of the user.

Meanwhile, the method of operating the robot and the robot system according to the embodiment of the present invention can be implemented as a code readable by a processor on a recording medium readable by the processor. The processor-readable recording medium includes all kinds of recording apparatuses in which data that can be read by the processor is stored. Examples of the recording medium that can be read by the processor include a ROM, a RAM, a CD-ROM, a magnetic tape, a floppy disk, an optical data storage apparatus, and the like, and may also be implemented in the form of a carrier wave such as transmission over the Internet. In addition, the processor-readable recording medium may be distributed over network-connected computer systems so that code readable by the processor in a distributed fashion can be stored and executed.

Although the exemplary embodiments of the present invention have been disclosed for illustrative purposes, those skilled in the art will appreciate that various modifications, additions and substitutions are possible, without departing from the scope of the invention as disclosed in the accompanying claims. Accordingly, the scope of the present invention is not construed as being limited to the described embodiments but is defined by the appended claims

## Claims

1. A robot system comprising:
an emotion recognizer (74a) including:
a uni-modal preprocessor (520) having a plurality of recognizers (521, 522, 523) for modals, the plurality of recognizers (521, 522, 523) being taught to recognize emotion information of a user contained in a plurality of uni-modal input data; and
a multi-modal recognizer (510) configured to merge output data of the plurality of recognizers (521, 522, 523) for each modal, the multi-modal recognizer (510) being taught to recognize emotion information of the user contained in the merged data; and
a robot (100) including:
a communication unit (190) configured to transmit moving image data including data of the user to the emotion recognizer (74a) coupled to the robot (100),
wherein the emotion recognizer (74a) is taught to recognize emotion information of the user included in the moving image data,
wherein the robot (100) is configured to receive a complex emotion recognition result from the emotion recognizer (74a), the complex emotion recognition result including respective emotion recognition results of the plurality of recognizers (521, 522, 523) for each modal and an emotion recognition result of the multi-modal recognizer (510), and
a sound output unit (181) configured to utter a question for checking an emotion of the user by combining two or more emotion recognition results that do not match, when the complex emotion recognition result includes the two or more emotion recognition results that do not match.

2. The robot system of claim 1 comprising:
a server (70), wherein the emotion recognizer (74a) is included in the server (70);
wherein the communication unit (190) of the robot (100) is configured to transmit the moving image data of the user to the server (70),
the robot is configured to receive the complex emotion recognition result including a plurality of emotion recognition results of the user from the server (70); and
wherein the sound output unit (181) of the robot (100) is configured to utter a question for checking an emotion of user by combining two or more emotion recognition results that do not match, when the complex emotion recognition result includes the two or more emotion recognition results that do not match.

3. The robot system of claim 1 or 2, wherein the server (70) or the robot (100) comprises a post-processor (1220) for outputting a final emotion recognition result according to a predetermined criteria, when the received complex emotion recognition result includes two or more emotion recognition results that do not match, preferably the post-processor (1220) is configured to output a contradictory emotion including two emotion classes among the complex emotion recognition, as the final emotion recognition result, when the complex emotion recognition result includes two or more emotion recognition results that do not match.

4. The robot system of claim 3, wherein the post-processor (1220) is configured to select two emotion classes having a highest probability among the complex emotion recognition result as the contradictory emotion.

5. The robot system of claim 1 or 2, wherein the emotion recognizer (74a) comprises:
the plurality of recognizers (521, 522, 523) for each modal including speech, image, and text, wherein the plurality of uni-modal input data is generated by separation of the moving image data including the user, and comprises at least two of image uni-modal input data, speech uni-modal input data, and text uni-modal input data.

6. The robot system of claim 5, wherein the emotion recognizer (74a) further comprises a modal separator (530) for separating the moving image data including the user by each uni-modal of speech, image and text to generate the plurality of uni-modal input data.

7. The robot system of claim 5 or 6, wherein the text uni-modal input data is data acquired by converting a speech separated from the moving image data into text.

8. The robot system of any one of claims 5, 6 or 7, wherein the plurality of recognizers (521, 522, 523) for each modal comprises an artificial neural network corresponding to input characteristic of uni-modal input data inputted respectively.

9. The robot system of any one of claims 5-8,
wherein the multi-modal recognizer (510) comprises:
a merger (512) configured to combine feature point vectors outputted by the plurality of recognizers (521, 522, 523) for each modal; and
a multi-modal emotion recognizer (511) taught to recognize the emotion information of the user contained in output data of the merger,
wherein the feature point vectors are hidden states (740, 840, 940) extracted by the plurality of recognizers (521, 522, 523) based on the plurality of uni-modal input data.

10. The robot system of claims 5-9, wherein the emotion recognition result of each of the plurality of recognizers (521, 522, 523) for each modal comprises a predetermined number of probabilities for each of preset emotion classes.

11. The robot system of any one of claims 3-10, wherein the post-processor (1220) is included in the emotion recognizer (74a) for outputting a final emotion recognition result according to a predetermined criterium, when the complex emotion recognition result includes two or more emotion recognition results that do not match.

12. The robot system of any one of claims 5-10, wherein the post-processor (1220) is configured to output an emotion recognition result that matches the emotion recognition result of the multi-modal recognizer among the emotion recognition results of the recognizers (521, 522, 523) for each modal, as the final emotion recognition result, when the complex emotion recognition result includes two or more emotion recognition results that do not match.

13. The robot system of any one of claims 3-10, wherein the post-processor (1220) is configured to output a contradictory emotion including two emotion classes among the complex emotion recognition result, as the final emotion recognition result, when the complex emotion recognition result includes two or more emotion recognition results that do not match.

14. The robot system of claim 13, wherein the post-processor (1220) is configured to select two emotion classes having a highest probability among the emotion recognition result of the multi-modal recognizer (510) as the contradictory emotion.

## Patentansprüche

1. Robotersystem, das umfasst:
einen Emotionserkenner (74a), der enthält:
einen unimodalen Vorprozessor (520) mit mehreren Erkennern (521, 522, 523) für Modale, wobei den mehreren Erkennern (521, 522, 523) beigebracht wurde, Emotionsinformationen eines Anwenders, die in mehreren unimodalen Eingangsdaten enthalten sind, zu erkennen; und
einen multimodalen Erkenner (510), der konfiguriert ist, Ausgangsdaten der mehreren Erkenner (521, 522, 523) für jedes Modal zu vereinigen, wobei dem multimodalen Erkenner (510) beigebracht wurde, Emotionsinformationen, die in den vereinigten Daten enthalten sind, zu erkennen; und
einen Roboter (100), der enthält:
eine Kommunikationseinheit (190), die konfiguriert ist, Bewegtbilddaten, die Daten des Anwenders enthalten, an den Emotionserkenner (74a), der an den Roboter (100) gekoppelt ist, zu senden,
wobei dem Emotionserkenner (74a) beigebracht wurde, Emotionsinformationen des Anwenders, die in den Bewegtbilddaten enthalten sind, zu erkennen,
wobei der Roboter (100) konfiguriert ist, ein komplexes Emotionserkennungsergebnis von dem Emotionserkenner (74a) zu empfangen, wobei das komplexe Emotionserkennungsergebnis jeweilige Emotionserkennungsergebnisse der mehreren Erkenner (521, 522, 523) für jedes Modal und ein Emotionserkennungsergebnis des multimodalen Erkenners (510) enthält, und
eine Tonausgabeeinheit (181), die konfiguriert ist, eine Frage zu äußern, um eine Emotion des Anwenders durch Vereinigen zweier oder mehrerer Emotionserkennungsergebnisse, die nicht übereinstimmen, zu überprüfen, wenn das komplexe Emotionserkennungsergebnis die zwei oder mehr Emotionserkennungsergebnisse enthält, die nicht übereinstimmen.

2. Robotersystem nach Anspruch 1, das umfasst:
einen Server (70), wobei der Emotionserkenner (74a) in dem Server (70) enthalten ist;
wobei die Kommunikationseinheit (190) des Roboters (100) konfiguriert ist, die Bewegtbilddaten des Anwenders an den Server (70) zu senden,
der Roboter konfiguriert ist, das komplexe Emotionserkennungsergebnis, das mehrere Emotionserkennungsergebnisse des Anwenders enthält, von dem Server (70) zu empfangen; und
wobei die Tonausgabeeinheit (181) des Roboters (100) konfiguriert ist, eine Frage zu äußern, um eine Emotion des Anwenders durch Vereinigen zweier oder mehrerer Emotionserkennungsergebnisse, die nicht übereinstimmen, zu überprüfen, wenn das komplexe Emotionserkennungsergebnis die zwei oder mehr Emotionserkennungsergebnisse enthält, die nicht übereinstimmen.

3. Robotersystem nach Anspruch 1 oder 2, wobei der Server (70) oder der Roboter (100) einen Postprozessor (1220) umfasst, um ein endgültiges Emotionserkennungsergebnis gemäß einem vorbestimmten Kriterium auszugeben, wenn das empfangene komplexe Emotionserkennungsergebnis zwei oder mehr Emotionserkennungsergebnisse enthält, die nicht übereinstimmen, wobei der Postprozessor (1220) vorzugsweise konfiguriert ist, eine widersprüchliche Emotion, die zwei Emotionsklassen unter der komplexen Emotionserkennung enthält, als das endgültige Emotionserkennungsergebnis auszugeben, wenn das komplexe Emotionserkennungsergebnis zwei oder mehr Emotionserkennungsergebnisse enthält, die nicht übereinstimmen.

4. Robotersystem nach Anspruch 3, wobei der Postprozessor (1220) konfiguriert ist, zwei Emotionsklassen mit einer höchsten Wahrscheinlichkeit unter dem komplexen Emotionserkennungsergebnis als die widersprüchliche Emotion auszuwählen.

5. Robotersystem nach Anspruch 1 oder 2, wobei der Emotionserkenner (74a) umfasst:
die mehreren Erkenner (521, 522, 523) für jedes Modal, das Sprache, Bild und Text enthält, wobei die mehreren unimodalen Eingangsdaten durch Trennen der Bewegtbilddaten, die den Anwender enthalten, erzeugt werden und mindestens zwei von unimodalen Bildeingangsdaten, unimodalen Spracheingangsdaten und unimodalen Texteingangsdaten umfassen.

6. Robotersystem nach Anspruch 5, wobei der Emotionserkenner (74a) ferner einen Modaltrenner (530 umfasst, um die Bewegtbilddaten, die den Anwender enthalten, durch jedes Unimodal von Sprache, Bild und Text zu trennen, um die mehreren unimodalen Eingangsdaten zu erzeugen.

7. Robotersystem nach Anspruch 5 oder 6, wobei die unimodalen Texteingangsdaten Daten sind, die durch Umsetzen einer Sprache getrennt von den Bewegtbilddaten in Text erfasst werden.

8. Robotersystem nach einem der Ansprüche 5, 6 oder 7, wobei die mehreren Erkenner (521, 522, 523) für jedes Modal jeweils ein künstliches neuronales Netz umfassen, das den Eingangseigenschaften unimodaler Eingangsdaten, die eingegeben werden, entspricht.

9. Robotersystem nach einem der Ansprüche 5-8,
wobei der multimodale Erkenner (510) umfasst:
einen Vereiniger (512), der konfiguriert ist, Merkmalspunktvektoren, die durch die mehreren Erkenner (521, 522, 523) für jedes Modal ausgegeben werden, zu vereinigen; und
einen multimodalen Emotionserkenner (511), dem beigebracht wurde, die Emotionsinformationen des Anwenders, die in Ausgangsdaten des Vereinigers enthalten sind, zu erkennen,
wobei die Merkmalspunktvektoren verdeckte Zustände (740, 840, 940) sind, die durch die mehreren Erkenner (521, 522, 523) anhand der mehreren unimodalen Eingangsdaten extrahiert werden.

10. Robotersystem nach den Ansprüchen 5-9, wobei das Emotionserkennungsergebnis jedes der mehreren Erkenner (521, 522, 523) für jedes Modal eine vorbestimmte Anzahl von Wahrscheinlichkeiten für jede von voreingestellten Emotionsklassen umfasst.

11. Robotersystem nach einem der Ansprüche 3-10, wobei der Postprozessor (1220) in dem Emotionserkenner (74a) enthalten ist, um ein endgültiges Emotionserkennungsergebnis gemäß einem vorbestimmten Kriterium auszugeben, wenn das komplexe Emotionserkennungsergebnis zwei oder mehr Emotionserkennungsergebnisse enthält, die nicht übereinstimmen.

12. Robotersystem nach einem der Ansprüche 5-10, wobei der Postprozessor (1220) konfiguriert ist, ein Emotionserkennungsergebnis, das mit dem Emotionserkennungsergebnis des multimodalen Erkenners unter den Emotionserkennungsergebnissen des Erkenners (521, 522, 523) für jedes Modal übereinstimmt, als das endgültige Emotionserkennungsergebnis auszugeben, wenn das komplexe Emotionserkennungsergebnis zwei oder mehr Emotionserkennungsergebnisse enthält, die nicht übereinstimmen.

13. Robotersystem nach einem der Ansprüche 3-10, wobei der Postprozessor (1220) konfiguriert ist, eine widersprüchliche Emotion, die zwei Emotionsklassen unter dem komplexen Emotionserkennungsergebnis enthält, als das endgültige Emotionserkennungsergebnis auszugeben, wenn das komplexe Emotionserkennungsergebnis zwei oder mehr Emotionserkennungsergebnisse enthält, die nicht übereinstimmen.

14. Robotersystem nach Anspruch 13, wobei der Postprozessor (1220) konfiguriert ist, zwei Emotionsklassen mit einer höchsten Wahrscheinlichkeit unter dem Emotionserkennungsergebnis des multimodalen Erkenners (510) als die widersprüchliche Emotion auszuwählen.

## Revendications

1. Système de robot comportant :
un reconnaisseur d'émotion (74a) incluant :
un préprocesseur unimodal (520) ayant une pluralité de reconnaisseurs (521, 522, 523) pour des modaux, la pluralité de reconnaisseurs (521, 522, 523) ayant appris à reconnaître des informations d'émotion d'un utilisateur contenues dans une pluralité de données d'entrée unimodales ; et
un reconnaisseur multimodal (510) configuré pour fusionner des données de sortie de la pluralité de reconnaisseurs (521, 522, 523) pour chaque modal, le reconnaisseur multimodal (510) ayant appris à reconnaître des informations d'émotion de l'utilisateur contenues dans les données fusionnées ; et
un robot (100) incluant :
une unité de communication (190) configurée pour transmettre des données d'images mobiles incluant des données de l'utilisateur au reconnaisseur d'émotion (74a) couplé au robot (100),
dans lequel le reconnaisseur d'émotion (74a) a appris à reconnaître des informations d'émotion de l'utilisateur incluses dans les données d'images mobiles,
dans lequel le robot (100) est configuré pour recevoir un résultat de reconnaissance d'émotion complexe provenant du reconnaisseur d'émotion (74a), le résultat de reconnaissance d'émotion complexe incluant des résultats de reconnaissance d'émotion respectifs de la pluralité de reconnaisseurs (521, 522, 523) pour chaque modal et un résultat de reconnaissance d'émotion du reconnaisseur multimodal (510), et
une unité de sortie sonore (181) configurée pour poser une question pour vérifier une émotion de l'utilisateur en combinant deux résultats de reconnaissance d'émotion ou plus qui ne correspondent pas, lorsque le résultat de reconnaissance d'émotion complexe inclut les deux résultats de reconnaissance d'émotion ou plus qui ne correspondent pas.

2. Système de robot selon la revendication 1 comportant :
un serveur (70), dans lequel le reconnaisseur d'émotion (74a) est inclus dans le serveur (70);
dans lequel l'unité de communication (190) du robot (100) est configurée pour transmettre les données d'images mobiles de l'utilisateur au serveur (70),
le robot est configuré pour recevoir le résultat de reconnaissance d'émotion complexe incluant une pluralité de résultats de reconnaissance d'émotion de l'utilisateur provenant du serveur (70) ; et
dans lequel l'unité de sortie sonore (181) du robot (100) est configurée pour poser une question pour vérifier une émotion de l'utilisateur en combinant deux résultats de reconnaissance d'émotion ou plus qui ne correspondent pas, lorsque le résultat de reconnaissance d'émotion complexe inclut les deux résultats de reconnaissance d'émotion ou plus qui ne correspondent pas.

3. Système de robot selon la revendication 1 ou 2, dans lequel le serveur (70) ou le robot (100) comporte un post-processeur (1220) pour délivrer en sortie un résultat de reconnaissance d'émotion final en fonction d'un critère prédéterminé, lorsque le résultat de reconnaissance d'émotion complexe reçu inclut deux résultats de reconnaissance d'émotion ou plus qui ne correspondent pas, le post-processeur (1220) est de préférence configuré pour délivrer en sortie une émotion contradictoire incluant deux classes d'émotion parmi la reconnaissance d'émotion complexe, en tant que résultat de reconnaissance d'émotion final, lorsque le résultat de reconnaissance d'émotion complexe inclut deux résultats de reconnaissance d'émotion ou plus qui ne correspondent pas.

4. Système de robot selon la revendication 3, dans lequel le post-processeur (1220) est configuré pour sélectionner deux classes d'émotion ayant une probabilité la plus élevée parmi le résultat de reconnaissance d'émotion complexe en tant qu'émotion contradictoire.

5. Système de robot selon la revendication 1 ou 2, dans lequel le reconnaisseur d'émotion (74a) comporte :
la pluralité de reconnaisseurs (521, 522, 523) pour chaque modal incluant de la parole, de l'image et du texte, dans lequel la pluralité de données d'entrée unimodales est générée par séparation des données d'images mobiles incluant l'utilisateur, et comporte au moins deux éléments parmi des données d'entrée unimodales d'image, des données d'entrée unimodales de parole et des données d'entrée unimodales de texte.

6. Système de robot selon la revendication 5, dans lequel le reconnaisseur d'émotion (74a) comporte en outre un séparateur modal (530) pour séparer les données d'images mobiles incluant l'utilisateur par chaque unimodal de parole, d'image et de texte pour générer la pluralité de données d'entrée unimodales.

7. Système de robot selon la revendication 5 ou 6, dans lequel les données d'entrée unimodales de texte sont des données acquises en convertissant une parole séparée des données d'images mobiles, en texte.

8. Système de robot selon l'une quelconque des revendications 5, 6 ou 7, dans lequel la pluralité de reconnaisseurs (521, 522, 523) pour chaque modal comporte un réseau neuronal artificiel correspondant à une caractéristique d'entrée de données d'entrée unimodales respectivement appliquées en entrée.

9. Système de robot selon l'une quelconque des revendications 5 à 8, dans lequel le reconnaisseur multimodal (510) comporte :
un fusionneur (512) configuré pour combiner des vecteurs de points de caractéristiques délivrés en sortie par la pluralité de reconnaisseurs (521, 522, 523) pour chaque modal ; et
un reconnaisseur d'émotion multimodal (511) ayant appris à reconnaître les informations d'émotion de l'utilisateur contenues dans des données de sortie du fusionneur,
dans lequel les vecteurs de points de caractéristiques sont des états cachés (740, 840, 940) extraits par la pluralité de reconnaisseurs (521, 522, 523) sur la base de la pluralité de données d'entrée unimodales.

10. Système de robot selon les revendications 5 à 9, dans lequel le résultat de reconnaissance d'émotion de chaque reconnaisseur de la pluralité de reconnaisseurs (521, 522, 523) pour chaque modal comporte un nombre prédéterminé de probabilités pour chacune des classes d'émotion prédéfinies.

11. Système de robot selon l'une quelconque des revendications 3 à 10, dans lequel le post-processeur (1220) est inclus dans le reconnaisseur d'émotion (74a) pour délivrer en sortie un résultat de reconnaissance d'émotion final en fonction d'un critère prédéterminé, lorsque le résultat de reconnaissance d'émotion complexe inclut deux résultats de reconnaissance d'émotion ou plus qui ne correspondent pas.

12. Système de robot selon l'une quelconque des revendications 5 à 10, dans lequel le post-processeur (1220) est configuré pour délivrer en sortie un résultat de reconnaissance d'émotion qui correspond au résultat de reconnaissance d'émotion du reconnaisseur multimodal parmi les résultats de reconnaissance d'émotion des reconnaisseurs (521, 522, 523) pour chaque modal, en tant que résultat de reconnaissance d'émotion final, lorsque le résultat de reconnaissance d'émotion complexe inclut deux résultats de reconnaissance d'émotion ou plus qui ne correspondent pas.

13. Système de robot selon l'une quelconque des revendications 3 à 10, dans lequel le post-processeur (1220) est configuré pour délivrer en sortie une émotion contradictoire incluant deux classes d'émotion parmi le résultat de reconnaissance d'émotion complexe, en tant que résultat de reconnaissance d'émotion final, lorsque le résultat de reconnaissance d'émotion complexe inclut deux résultats de reconnaissance d'émotion ou plus qui ne correspondent pas.

14. Système de robot selon la revendication 13, dans lequel le post-processeur (1220) est configuré pour sélectionner deux classes d'émotion ayant une probabilité la plus élevée parmi le résultat de reconnaissance d'émotion du reconnaisseur multimodal (510) en tant qu'émotion contradictoire.
